# EUROPEAN PATENT SPECIFICATION

(11) **EP 1 795 940 B1**
(45) Date of publication and mention of the grant of the patent: **13.06.2012**
(21) Application number: 04788367.3
(22) Date of filing: 30.09.2004
(51) Int. Cl.: G02B 7/00, G02B 21/30

(54) **MONITORING DEVICE AND STAGE UNIT**
ÜBERWACHUNGSEINRICHTUNG UND BÜHNENEINHEIT
DISPOSITIF DE CONTRÔLE ET UNITÉ DE PLATINE

(43) Date of publication of application: 13.06.2007
(73) Proprietor: Hirata Corporation, Tokyo 142-0041 (JP)
(72) Inventor: HARUKAWA, Sumio, HIRATA CORPORATION, Shinagawa-ku, Tokyo 1420041 (JP)
(74) Representative: HOFFMANN EITLE
(86) International application number: PCT/JP2004/014339
(87) International publication number: WO 2006/038255

(56) References cited:
- EP-A1- 0 029 238
- JP-A- 2002 098 909
- JP-A- 2002 207 175
- JP-A- 2003 050 358
- US-A- 4 589 741
- US-A- 6 160 662
- US-B1- 6 233 093

## Description

### TECHNICAL FIELD

The present invention relates to a monitoring device used as a microscope, physiochemical device, medical appliance, or the like.

### BACKGROUND ART

EP 0 029 238 A1 describes a specimen holder system for upright microscopes. A surface of the specimen holder is kept in the focus plane of an object lens by means of a stage member of the microscope.

US 6,233,093 B1 relates to a temperature control for microscopy. An apparatus for controlling the temperature of a microscopy sample comprises an internal housing made of a highly heat conducting material for holding a sample to be subjected to microscopy.

An inverted microscope having a variable stage position is described in US 6,160,662 A.

In a monitoring device such as a microscope, a monitored object is placed on a stage. The relative positional relationship between an objective lens and the stage is adjusted to focus the objective lens. Then, the monitored object is monitored. When the monitored object is a human cell, it is desired to monitor the monitored object while maintaining it at a temperature (about 37°C) close to that of the human body. To maintain the monitored object at such a temperature, generally, the monitoring device is left in a temperature-controlled thermostatic chamber for a predetermined period of time and used when the monitored object reaches a predetermined temperature, or the entire monitoring device is covered with a thermostatic hood for a predetermined period of time and used when the monitored object reaches a predetermined temperature.

Operation in the thermostatic chamber which is temperature-controlled to about 37°C makes the operator feel stressed and decreases the operation efficiency greatly. With the method of covering the entire monitoring device with the thermostatic hood, the operation of injecting or exchanging the cell or specimen which serves as the monitored object is cumbersome and is inefficient accordingly. Hence, it has been proposed to provide the monitoring device with a heater and to control the temperature of the monitored object. In this case, the temperature of the laboratory may be room temperature (about 24°C). This can reduce the load on the operator, and can reduce the injecting and exchanging operations of the cell or specimen serving as the monitored object.

To maintain the monitored object in the roomtemperature laboratory at a constant temperature requires frequent temperature control of the heater. A change in heater temperature causes thermal strain (thermal expansion and thermal shrinkage) in members that form the stage. Even when focusing is performed once, defocus may occur. When recording the monitored image of the monitored object, the image may become out of focus, and a desired image may not be obtained.

As a technique to prevent such defocus caused by the thermal strain, for example, Japanese Patent Laid-Open No. 2003-43373 proposes a technique of forming a monitoring device with a material having a low coefficient of thermal expansion. Also, Japanese Patent Laid-Open No. 2002-207175 proposes formation of a monitoring device using a plurality of types of members having different coefficients of thermal expansion. In either case, however, the cost of the material increases and machining of the members is not easy.

### DISCLOSURE OF INVENTION

Objects of the present invention are defined in claims 1 and 7 below. The dependent claims are directed to optional and preferred features.

It is an object of the present invention to prevent defocus comparatively easily.

The present invention provides a monitoring device as defined in claim 1 below. The monitoring device comprises an objective lens and a stage unit, wherein the stage unit comprises a first stage member on which a monitoring object is set, and a second stage member which includes a placement portion on which the first stage member is placed and supports the first stage member, and a monitoring surface of the monitoring object which is set on the first stage member and a contact surface of the first stage member on the placement portion with the second stage member are set substantially on the same horizontal plane.

The present invention also provides a stage unit for a monitoring device as defined in claim 7 below. The stage unit comprises a first stage member on which a monitoring object is set, and a second stage member which includes a placement portion on which the first stage member is placed and supports the first stage member, wherein a monitoring surface of the monitoring object which is set on the first stage member and a contact surface of the first stage member on the placement portion with the second stage member are set substantially on the same horizontal plane.

According to the present invention, the monitoring surface of the monitoring object which is set on the first stage member and the contact surface of the first stage member on the placement portion with the second stage member are set substantially on the same horizontal plane, so the monitoring surface is located on the neutral plane of the thermal strain of the first stage member. Even if the first stage member strains thermally, the position of the monitoring surface does not change. This principle can prevent defocus comparatively easily.

### BRIEF DESCRIPTION OF DRAWINGS

Fig. 1 is a sectional view showing the structure of a monitoring device A according to the first embodiment (not part of the present invention);
Fig. 2 is a partial enlarged view of the monitoring device A in Fig. 1 and shows the positional relationship between a monitoring surface Z' and the upper surface of a placement portion 32b (the contact surface of a first stage member 31 with a second stage member 32);
Fig. 3 is a view showing the outer appearance of a monitoring device B according to the second embodiment of the present invention;
Fig. 4 is a plan view of the monitoring device B from which a holder 1312 has been removed;
Fig. 5 is a plan view of the monitoring device B from which a first stage member 131 has been removed;
Fig. 6 is a sectional view of a stage unit 103 taken along the line X1 - X1 of Fig. 4;
Fig. 7 is a sectional view of the stage unit 103 taken along the line X2 - X2 of Fig. 4;
Fig. 8 is a sectional view of a main body 1311 taken along the line X3 - X3 of Fig. 4 and shows the arrangement of a groove 1311c; and
Fig. 9 is a sectional view of the main part which shows the structure of the monitoring device B and is taken along the same line as the line X2 - X2 in Fig. 4.

### BEST MODE FOR CARRYING OUT THE INVENTION

### <First Embodiment>

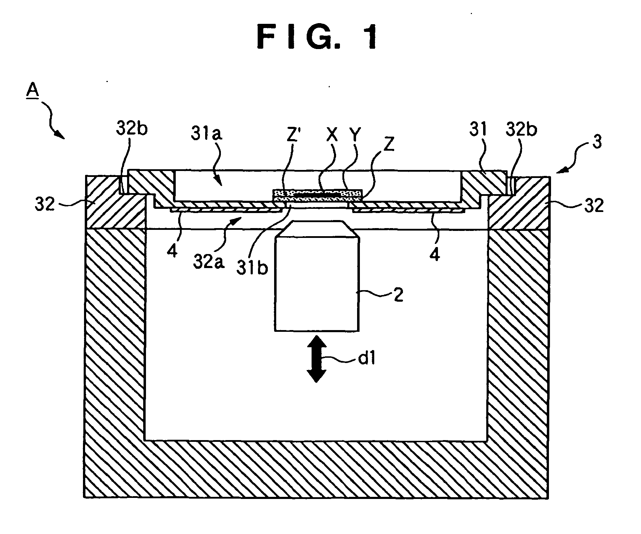

Fig. 1 is a sectional view showing the structure of a monitoring device A according to the first embodiment, which is not part of the present invention. The monitoring device A comprises an upwardly open housing 1, an objective lens 2 accommodated in the housing 1, and a stage unit 3 mounted on the upper surface of the housing 1. The stage unit 3 comprises a first stage member 31 and second stage member 32.

The second stage member 32 is formed of a plate-like member having an opening 32a at its center. The second stage member 32 has a placement portion 32b around the opening 32a to place the first stage member 31 thereon. The peripheral portion of the bottom surface of the first stage member 31 is placed on the upper surface of the placement portion 32b, so the second stage member 32 supports the first stage member 31 horizontally. Namely, the upper surface of the placement portion 32b serves as the contact surface of the first stage member 31 with the second stage member 32.

The first stage member 31 is formed of a plate-like member having a recess 31a at its center. The recess 31a has an opening 31b at its center. The bottom surface of the first stage member 31 opens through the opening 31b. In this embodiment, a monitored object X is placed on a placement member Z, and a protection plate Y covers the monitored object X. In this state, the placement member Z is set on the bottom surface of the recess 31a from above the recess 31a. At this time, the monitored object X is set to locate above the opening 31b. The placement member Z is a transparent or translucent member and formed of, e.g., a plastic plate or glass plate that hardly expands or shrinks thermally. The protection plate Y is formed of a plastic plate, glass plate, or semiconductor glass plate.

According to this embodiment, the objective lens 2 is disposed under the opening 31b. The monitored object X is monitored by the objective lens 2 through the placement member Z, and an upper surface Z' of the monitoring surface Z' serves as the monitoring surface of the monitored object X.

The first stage member 31 is provided with a heater 4 at its bottom surface. The heater 4 is disposed to surround the opening 31b and generates heat when, e.g., power is supplied to it. The heater 4 serves as a heating means for heating the first stage member 31, and maintains the monitored object X on the placement member Z at a target temperature.

Each of the housing 1 and second stage member 32 is desirably made of a material having a small thermal conductivity, small coefficient of thermal expansion, and small coefficient of thermal shrinkage. An example of the material having a small coefficient of thermal expansion includes quartz, and an example of the material having a small heat conductivity includes a resin. The first stage member 31 is desirably made of a material having a high thermal conductivity so the heater 4 can adjust its temperature effectively. An example of such a material includes aluminum. A mechanism (not shown) can move the objective lens 2 in directions of arrows d1 in response to the manipulation of the operator, or automatic control may move the objective lens 2. By moving the objective lens 2 in the directions of the arrows d1, the distance between the monitored object X and objective lens 2 is adjusted to perform focusing. If providing the objective lens 2 with, e.g., an image sensing element such as a CCD, an optical fiber cable, or the like, the operator can see the monitor image from the objective lens 2 on a monitor or the like outside the device.

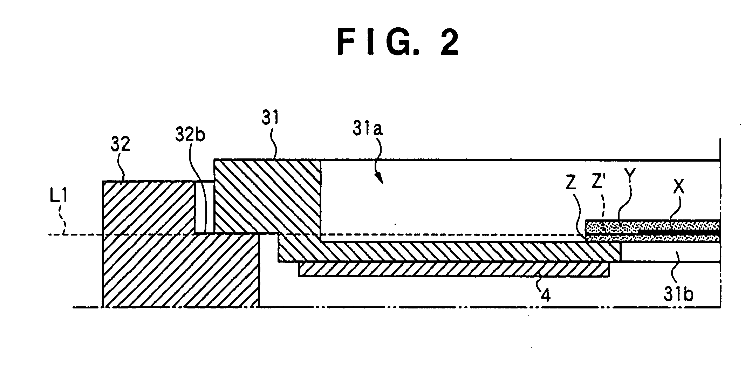

The principle of preventing defocus in the monitoring device A will be explained. Fig. 2 is a partial enlarged view of the monitoring device A in Fig. 1 and shows the positional relationship between the monitoring surface Z' and the upper surface of the placement portion 32b (the contact surface of the first stage member 31 with the second stage member 32). As shown in Fig. 2, the monitoring surface Z' and the upper surface of the placement portion 32b are set approximately on the same horizontal plane indicated by a broken line L1.

The first stage member 31 is desirably made of a material having a high thermal conductivity, so the heater 4 can adjusts the temperature of the first stage member 31 easily. Such a material with a high thermal conductivity generally has a high coefficient of thermal expansion and high coefficient of thermal shrinkage, and will thermally strain readily. According to the present invention, the first stage member 31 is placed on and supported by the upper surface of the placement portion 32b. Thus, the neutral plane of the thermal strain of the first stage member 31 forms a horizontal plane which is identical with the upper surface of the placement portion 32b. According to this embodiment, as the monitoring surface Z' and the upper surface of the placement portion 32b are set approximately on the same horizontal plane, the monitoring surface Z' is located on the neutral plane of the thermal strain of the first stage member 31.

Therefore, after moving the objective lens 2 to focus, even if the temperature adjustment of the heater 4 causes a thermal strain in the first stage member 31, the distance between the monitoring surface Z' and objective lens 2 does not change, and defocus does not occur. This design principle can prevent defocus comparatively easily in this embodiment. To set the monitoring surface Z' and the upper surface of the placement portion 32b (the contact surface of the first stage member 31 with the second stage member 32) on the same horizontal plane, the thickness of the placement member Z may be designed to match the distance (height) from the bottom surface of the recess 31a to the line L1, or the depth of the bottom surface of the recess 31a may be designed in accordance with the thickness of the placement member Z. Although the monitoring surface Z' and the upper surface of the placement portion 32b are desirably set on the same horizontal plane, if the difference in height between them is as small as, e.g., about several mm (more desirably about 1 mm), it rarely influences focus. Thus, it suffices as far as the monitoring surface Z' and the upper surface of the placement portion 32b are on approximately the same horizontal plane.

### <Second Embodiment>

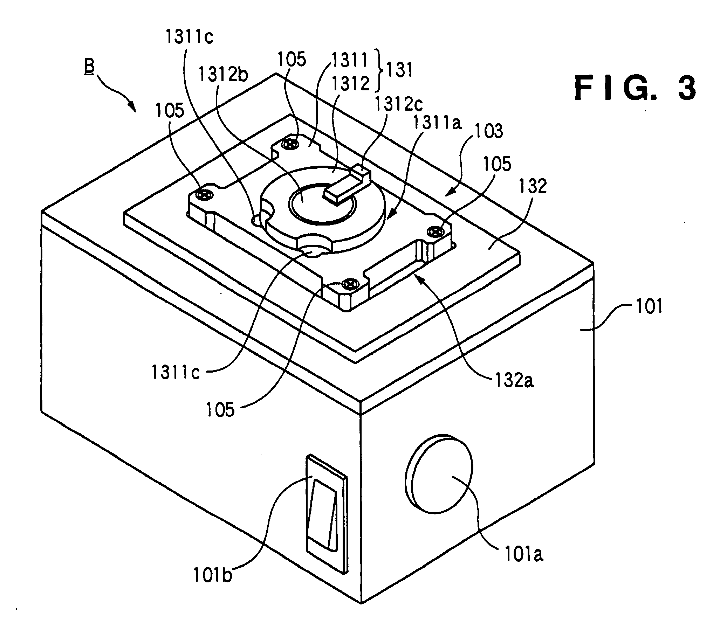

Fig. 3 is a view showing the outer appearance of a monitoring device B according to the second embodiment of the present invention. The monitoring device B comprises a housing 101, an objective lens (not shown) accommodated in the housing 101, and a stage unit 103 mounted on the upper surface of the housing 101. The housing 101 is provided with a manipulating portion 101a to adjust the position of, e.g., the objective lens (not shown in Fig. 3). The housing 101 is also provided with a power switch 101b. The stage unit 103 comprises a first stage member 131 and second stage member 132. The first stage member 131 comprises a main body 1311 and a holder 1312 which is detachably mounted in the main body 1311. The main body 1311 and holder 1312 are made of materials having the same coefficient of thermal expansion and the same coefficient of thermal shrinkage, and can be made of one material.

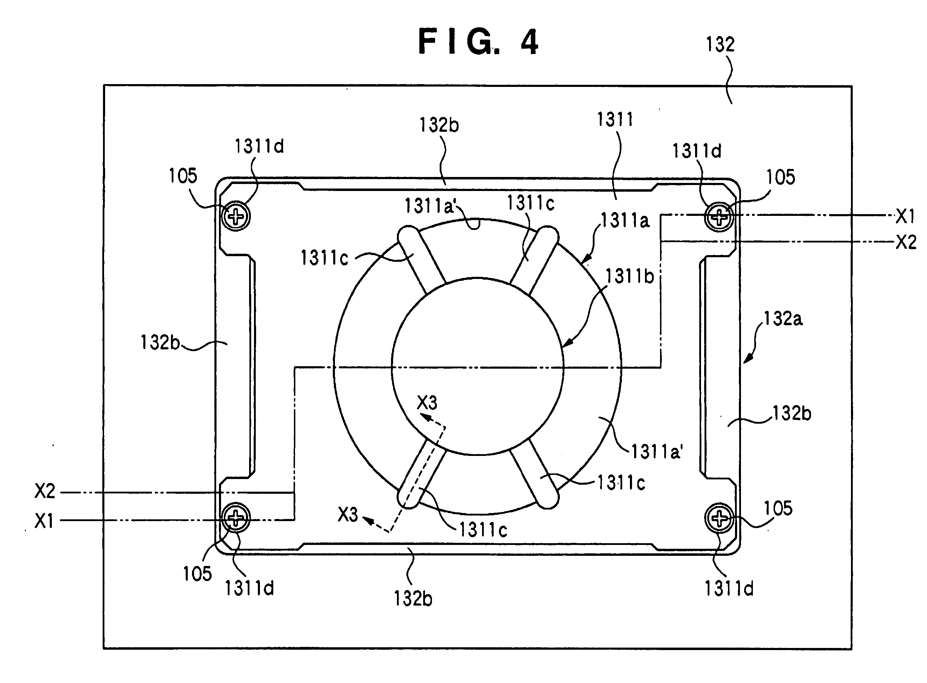

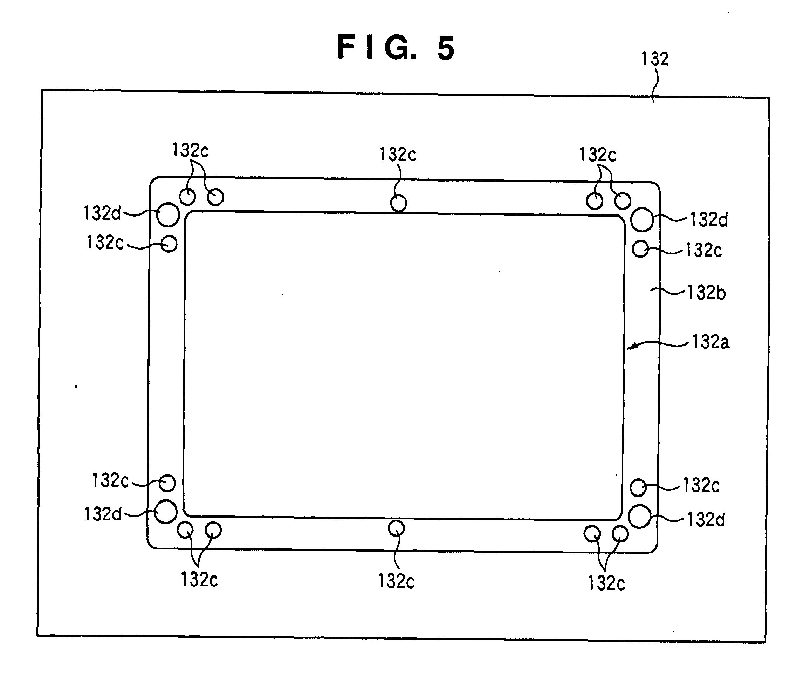

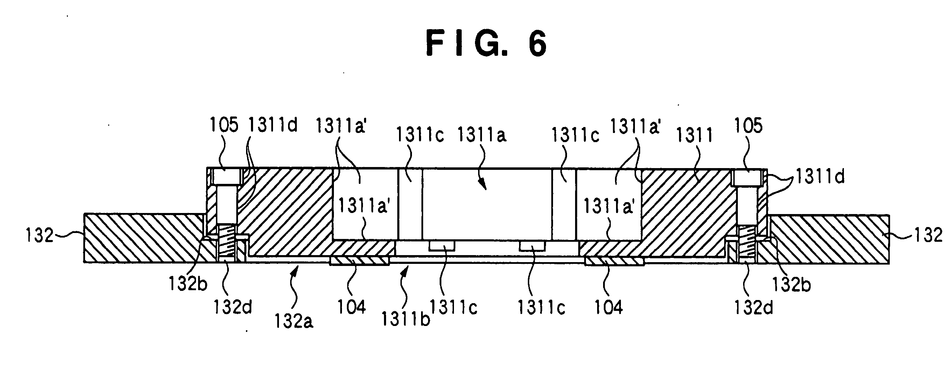

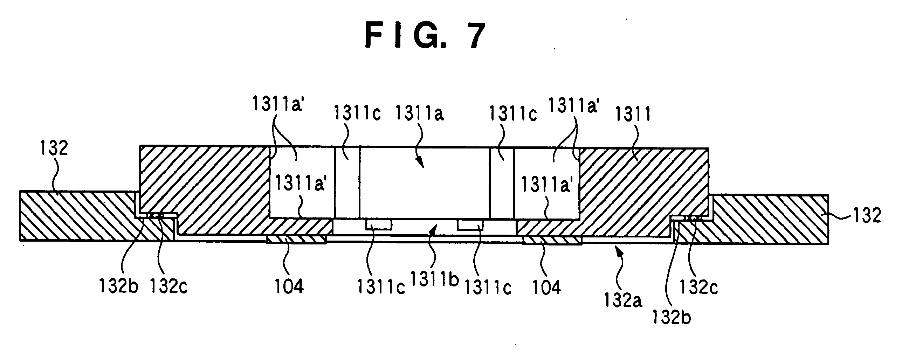

Fig. 4 is a plan view of the monitoring device B from which the holder 1312 has been removed, and Fig. 5 is a plan view of the monitoring device B from which the first stage member 131 has been removed. Fig. 6 is a sectional view of the stage unit 103 taken along the line X1 - X1 of Fig. 4, and Fig. 7 is a sectional view of the stage unit 103 taken along the line X2 - X2 of Fig. 4.

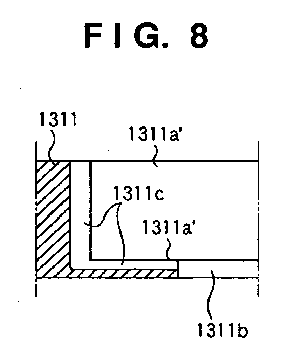

The main body 1311 is a plate-like member having an upwardly open recess 1311a with a circular section. The holder 1312 is detachably inserted in the recess 1311a. The recess 1311a has a hole 1311b in its bottom surface 1311a'. The hole 1311b extends through the bottom surface of the main body 1311. An inner surface 1311a" of the inner surface 1311a" has grooves 1311c extending upward from the bottom surface 1311a' of the recess 1311a. Fig. 8 is a sectional view of the main body 1311 taken along the line X3 - X3 of Fig. 4 and shows the arrangement of a groove 1311c.

The grooves 1311c run to the peripheral edge of the hole 1311b. Air from under the main body 1311 can be released from the hole 1311b to above the main body 1311 through the grooves 1311c. According to this embodiment, the plurality of (four) grooves 1311c are formed and disposed radially from the hole 1311b.

The bottom surface of the main body 1311 is provided with a heater 104. The heater 104 is disposed to surround the hole 1311b and generates heat when, e.g., power is supplied to it. The heater 4 serves as a heating means for heating the entire first stage member 131, and maintains a monitored object X (to be described later) in the holder 1312 at a target temperature. Each of the main body 1311 and holder 1312 is desirably made of a material having a high thermal conductivity so the heater 104 can adjust its temperature effectively. An example of such a material includes aluminum.

The second stage member 132 is formed of a plate-like member having a circular opening 132a at its center. Around the opening 132a, the second stage member 132 has a placement portion 132b on which the main body 1311 of the first stage member 131 is placed. According to this embodiment, the upper surface of the placement portion 132b has a plurality of projections 132c. The peripheral portion of the bottom surface of the main body 1311 is placed on the projections 132c so the second stage member 132 supports the main body 1311 horizontally. Namely, the horizontal plane that the distal ends of the plurality of projections 132c define serves as a contact surface of the first stage member 131 (main body 1311) with the second stage member 132.

The main body 1311 has holes 1311d at its four corners, and the placement portion 132b has screw holes 132d at its four corners. By placing the main body 1311 on the projections 132c, inserting bolts 105 from the holes 1311d, and fastening the bolts 105 in the screw holes 132d, the main body 1311 is fixed to the second stage member 132. Even when the main body 1311 fixes to the second stage member 132, due to the presence of the projections 132c, the bottom surface of the main body 1311 is not in contact with the upper surface of the placement portion 132b. Namely, due to the presence of the projections 132c, the bottom surface of the main body 1311 and the second stage member 132 are in point contact with each other to decrease their contact area. Thus, heat of the main body 1311 heated by the heater 104 does not conduct to the second stage member 132 easily, thus suppressing thermal strain of the second stage member 132.

The projections 132c may be integrally formed with the second stage member 132, or be formed separately and attach to the second stage member 132. As the material the projections 132c, one having a thermal conductivity lower than that of the first stage member 131 is desirable. A material having a particularly low thermal conductivity, e.g., a PEEK material, is desirable.

According to this embodiment, a predetermined gap is provided between the side surface of the main body 1311 and the second stage member 132 so they will not come into contact with each other. This also makes it hard to conduct the heat of the main body 1311 to the second stage member 132. Each of the housing 101, second stage member 132, and bolts 105 is desirably made of a material having a small thermal conductivity, a small coefficient of thermal expansion, and a small coefficient of shrinkage. An example of a material having a small coefficient of thermal expansion includes quartz, and an example of a material having a small thermal conductivity includes a resin.

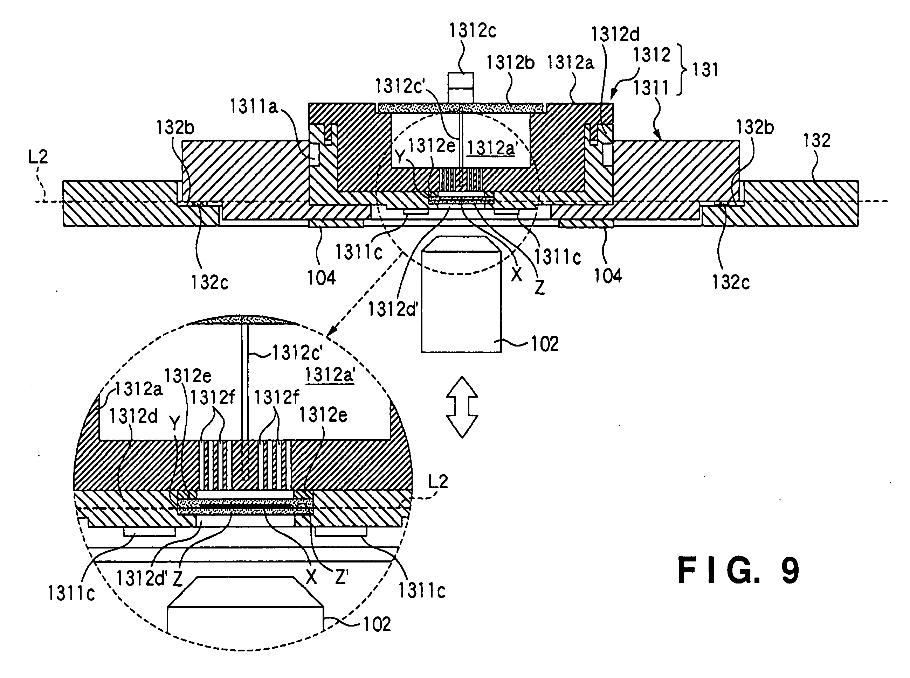

The arrangement of the holder 1312, and a principle of preventing defocus in the monitoring device B will be described. Fig. 9 is a sectional view of the main part which shows the structure of the monitoring device B and is taken along the same line as the line X2 - X2 in Fig. 4. First, the arrangement of the holder 1312 will be described. Fig. 9 shows a state wherein the holder 1312 is mounted on the main body 1311.

The holder 1312 forms a cylinder as a whole, and comprises an upper unit 1312a and lower unit 1312d. The upper unit 1312a and lower unit 1312d are separable, and a clamp mechanism (not shown) fixes them when using the holder 1312.

The upper unit 1312a has a recess 1312a' with a circular section at its center. The recess 1312a' stores a reagent or the like to be supplied to the monitored object X. The reagent in the recess 1312a' is supplied to the monitored object X through a plurality of pipes 1312f extending from the bottom of the recess 1312a' to the bottom surface of the upper unit 1312a. A lid 1312b is detachably mounted on the recess 1312a'.

The holder 1312 is provided with a temperature sensor 1312c, which detects the temperature of the holder 1312, at its upper surface. The temperature sensor 1312c has a rod-shaped sensor portion 1312c' which extends through the recess 1312a' downward. The heater 104 controls the temperatures of the main body 1311 and holder 1312 on the basis of the detection result of the temperature sensor 1312c.

The lower unit 1312d forms an almost cylindrical shape, and has a hole 1312d' with a circular section at the center of its bottom. The hole 1312d' is a stepped hole the upper portion of which has a hole diameter larger than that of its lower portion. A placement member Z on which the monitored object X is placed is set on the stepped portion. A plate-like holding member Y having a recess in its bottom surface stores the monitored object X in the recess, and is placed on the placement member Z. The placement member Z is a transparent or translucent member and formed of, e.g., a plastic plate or glass plate that hardly expands or shrinks thermally. The holding member Y is formed of a plastic plate, glass plate, or semiconductor glass plate. When setting the monitored object X in the holder 1312, first, the upper unit 1312a and lower unit 1312d are separated. The holding member Y which stores the monitored object X in its recess is placed on the placement member Z, and the placement member Z is set in the hole 1312d'. After that, annular packing 1312e is set on the holding member Y. The upper unit 1312a is set on the lower unit 1312d, and the clamp mechanism (not shown) fixes the upper and lower units 1312a and 1312d. The holder 1312 is then set on the main body 1311, thus ending preparation for monitoring.

An objective lens 102 is disposed under the holder 1312, i.e., under the first stage member 131. A mechanism (not shown) can move the objective lens 102 in directions of arrows d2 in response to the manipulation of the operator at the manipulating portion 101a, or automatic control may move the objective lens 102. By moving the objective lens 102 in the directions of the arrows d2, the distance between the monitored object X and objective lens 102 is adjusted to perform focusing. If providing the objective lens 102 with, e.g., an image sensing element such as a CCD, an optical fiber cable, or the like, the operator can see the monitor image from the objective lens 102 on a monitor or the like outside the device. In the case of this embodiment, the objective lens 102 is disposed under the placement member Z, and the operator monitors the placement member Z with the objective lens 102 through the placement member Z. The upper surface of the placement member Z serves as a monitoring surface Z' of the monitored object X.

The principle of preventing defocus in the monitoring device B will be explained. The defocus preventing principle according to this embodiment is the same as that in the monitoring device A. As shown in Fig. 9, in the monitoring device B, the monitoring surface Z' and a horizontal plane (the contact surface of the first stage member 131 (main body 1311) with the second stage member 132) defined by the distal ends of the projections 132c are set approximately on the same horizontal plane indicated by a broken line L2.

According to this embodiment, the first stage member 131 comprises the main body 1311 and holder 1312 which are separable from each other and made of materials having the same coefficient of thermal expansion and the same coefficient of thermal shrinkage. Accordingly, as shown in Fig. 9, with the holder 1312 being mounted on the main body 1311, when the heater 104 heats the main body 1311, heat conduction from the main body 1311 heats the holder 1312 as well, so the thermal strain amount of the main body 1311 and that of the holder 1312 become almost equal.

The main body 1311 is placed on and supported by the second stage member 132 (more specifically, by the projections 132c), and the holder 1312 is mounted on the main body 1311. Thus, the neutral plane of the thermal strain of the entire first stage member 131 forms a horizontal plane which is identical with the horizontal plane that the distal ends of the projections 132c define. According to this embodiment, as the monitoring surface Z' and the horizontal plane defined by the distal ends of the projections 132c are set approximately on the same horizontal plane, the monitoring surface Z' is located on the neutral plane of the thermal strain of the first stage member 131.

Therefore, after moving the objective lens 102 to focus, even if the temperature adjustment of the heater 104 causes a thermal strain in the first stage member 131, the distance between the monitoring surface Z' and objective lens 102 does not change, and defocus does not occur. This design principle can prevent defocus comparatively easily in this embodiment. According to this embodiment, particularly, the first stage member 131 comprises the main body 1311 and holder 1312 that are separable from each other to enable exchange of the monitored object X together with the holder 1312. This enables an efficient experiment.

According to this embodiment, as the grooves 1311c are formed, under the first stage member 131 and around the objective lens 102, the warm air heated by the heater 104 and the warm air generated by various types of constituent elements (not shown) arranged in the housing 101 flow through the grooves 1311c and are exhausted to above the first stage member 131. Accordingly, heat will not fill the housing 101 to cause thermal strain of the housing 101 or objective lens 102, or cloud the objective lens 102.

In the same manner as in the first embodiment, to set the monitoring surface Z' and the horizontal plane (the contact surface of the first stage member 131 (main body 1311) with the second stage member 132) defined by the distal ends of the projections 132c on the same horizontal plane, the placement member Z may be designed to have an appropriate thickness, or the heights of the projections 132c may be designed in accordance with the thickness of the placement member Z. Although the monitoring surface Z' and the horizontal plane (the contact surface of the first stage member 131 (main body 1311) with the second stage member 132) defined by the distal ends of the projections 132c are desirably set on the same horizontal plane, if the difference in height between them is as small as, e.g., about several mm (more desirably about 1 mm), it rarely influences focus. Thus, it suffices as far as the monitoring surface Z' and the horizontal plane are on approximately the same horizontal plane.

## Claims

1. A stage unit (103) for a monitoring device, comprising:
- a first stage member (131) comprising:
a holder (1312),
a placement member (Z) being supported within said holder, the placement member (Z) having an upper surface (Z') for placing a monitoring object (X) thereon, and
a main body (1311) including an upwardly open recess (1311a) in which said holder (1312) is mounted detachably, said recess having a predetermined depth, and
- a second stage member (132) which includes a placement portion (132b) on which said main body is placed and supported,
**characterized in that**
said placement portion (132b) is supporting said main body (1311) from below, and
said predetermined depth is designed so that
said upper surface (Z') of said placement member (Z) and a contact surface between said main body and said placement portion are substantially on the same horizontal plane (L2).

2. The stage unit (103) according to claim 1, in which said second stage member (132) supports said first stage member (131) horizontally.

3. The stage unit (103) according to claim 1, further comprising heating means (104), attached to said first stage member (131), for heating said first stage member (131).

4. The stage unit (103) according to claim 1, in which said second stage member (132) includes a plurality of projections (132c) on said placement portion which come into contact with said main body (1311).

5. The stage unit (103) according to claim 4, in which said projections (132c) are made of a material having a thermal conductivity which is lower than that of said first stage member (131).

6. A monitoring device (B) comprising an objective lens (102) and the stage unit (103) according to any one of claims 1 to 5.

7. The monitoring device according to claim 6, in which:
said objective lens (102) is disposed under said first stage member (131),
said main body (1311) is made of a material having a coefficient of thermal expansion and a coefficient of thermal shrinkage that are equal to those of said holder (1312), and
said main body (1311) includes a hole extending from a bottom surface of said recess through a bottom surface of said main body, and a groove, in an inner surface of said recess, which extends upward from said bottom surface of said recess.

## Patentansprüche

1. Bühneneinheit (103) für eine Überwachungseinrichtung, mit:
- einem ersten Bühnenelement (131), mit:
einem Halter (1312),
einem Platzierungselement (Z), das in dem Halter unterstützt ist und eine obere Fläche (Z') aufweist, um ein Überwachungsobjekt (X) darauf anzuordnen, und
einem Hauptkörper (1311), der eine nach oben geöffnete Aussparung (1311a) aufweist, in der der Halter (1312) abnehmbar montiert ist, wobei die Aussparung eine festgelegte Tiefe aufweist, und
- einem zweiten Bühnenelement (132), das einen Platzierungsabschnitt (132b) aufweist, auf dem der Hauptkörper angeordnet und unterstützt ist,
**dadurch gekennzeichnet, dass**
der Platzierungsabschnitt (132b) den Hauptkörper (1311) von unten unterstützt, und
die festgelegte Tiefe so ausgebildet ist, dass die obere Fläche (Z') des Platzierungselements (Z) und eine Kontaktfläche zwischen dem Hauptkörper und dem Platzierungsabschnitt im Wesentlichen auf der gleichen horizontalen Ebene (L2) sind.

2. Bühneneinheit (103) nach Anspruch 1, in der das zweite Bühnenelement (132) das erste Bühnenelement (131) horizontal unterstützt.

3. Bühneneinheit (103) nach Anspruch 1, des Weiteren mit einem Heizmittel (104), das an dem ersten Bühnenelement (131) zum Heizen des ersten Bühnenelements (131) angebracht ist.

4. Bühneneinheit (103) nach Anspruch 1, in der das zweite Bühnenelement (132) auf dem Platzierungsabschnitt eine Vielzahl von Vorsprüngen (132c) aufweist, die mit dem Hauptkörper (1311) in Kontakt kommen.

5. Bühneneinheit (103) nach Anspruch 4, in der die Vorsprünge (132c) aus einem Material hergestellt sind, das eine Wärmeleitfähigkeit aufweist, die niedriger als die des ersten Bühnenelements (131) ist.

6. Überwachungseinrichtung (B) mit einer Objektivlinse (102) und der Bühneneinheit (103) nach einem der Ansprüche 1 bis 5.

7. Überwachungseinrichtung nach Anspruch 6, in der:
die Objektivlinse (102) unter dem ersten Bühnenelement (131) angeordnet ist,
der Hauptkörper (1311) aus einem Material hergestellt ist, das einen thermischen Ausdehnungskoeffizienten und einen thermischen Schrumpfkoeffizienten aufweist, die gleich denen des Halters (1312) sind, und
der Hauptkörper (1311) ein Loch aufweist, das sich von einer Bodenfläche der Aussparung durch eine Bodenfläche des Hauptkörpers erstreckt, und eine Nut in einer Innenfläche der Aussparung, die sich von der Bodenfläche der Aussparung aufwärts erstreckt.

## Revendications

1. Unité formant platine (103) pour un dispositif de contrôle, comprenant :
- un premier élément de platine (131) comprenant :
un organe de maintien (1312),
un élément de placement (Z) étent supporté à l'intérieur dudit organe de maintien, l'élément de placement (Z) ayant une surface supérieure (Z') pour placer un objet de contrôle (X) dessus, et
un corps principal (1311) incluant une partie en retrait ouverte vers le haut (1311a) dans laquelle ledit organe de maintien (1312) est monté de façon amovible, ladite partie en retrait ayant une profondeur prédéterminée, et
- un second élément de platine (132) qui inclut une partie de placement (132b) sur laquelle ledit corps principal est placé et supporté,
**caractérisé en ce que**
ladite partie de placement (132b) supporte ledit corps principal (1311) à partir du dessous, et
ladite profondeur prédéterminée est conçue de sorte que ladite surface supérieure (Z') dudit élément de placement (Z) et une surface de contact entre ledit corps principal et ladite partie de placement sont substantiellement sur le même plan horizontal (L2).

2. Unité formant platine (103) selon la revendication 1, dans laquelle ledit second élément de platine (132) supporte ledit premier l'élément de platine (131) horizontalement.

3. Unité formant platine (103) selon la revendication 1, comprenant en outre un moyen de chauffage (104), attaché audit premier élément de platine (131), pour chauffer ledit premier élément de platine (131).

4. Unité formant platine (103) selon la revendication 1, dans laquelle ledit second élément de platine (132) inclut une pluralité de parties en saillie (132c) sur ladite partie de placement qui entrent en contact avec ledit corps principal (1311).

5. Unité formant platine (103) selon la revendication 4, dans laquelle lesdites parties en saillie (132c) sont faites d'une matière ayant une conductibilité thermique qui est inférieure à celle dudit premier élément de platine (131).

6. Dispositif de contrôle (B) comprenant une lentille d'objectif (102) et l'unité formant platine (103) selon l'une quelconque des revendications 1 à 5.

7. Dispositif de contrôle selon la revendication 6, dans lequel :
ladite lentille d'objectif (102) est disposée sous ledit premier élément de platine (131),
ledit corps principal (1311) est fait d'une matière ayant un coefficient de dilatation thermique et un coefficient de contraction thermique qui sont égaux à ceux dudit organe de maintien (1312), et
ledit corps principal (1311) inclut un trou s'étendant à partir d'une surface de fond de ladite partie en retrait à travers une surface de fond dudit corps principal, et une rainure, dans une surface intérieure de ladite partie en retrait, qui s'étend vers le haut à partir de ladite surface de fond de ladite partie en retrait.
